# EUROPEAN PATENT APPLICATION

(11) **EP 3 431 337 A1**
(43) Date of publication of application: **23.01.2019**
(21) Application number: 17000419.6
(22) Date of filing: 17.07.2017
(51) Int. Cl.: B60R 1/00

(54) **DISPLAY SYSTEM FOR AUTOMOTIVE VEHICLE**

(71) Applicant: Valeo Vision, 93012 Bobigny Cedex (FR)
(72) Inventor: Moisy, M. Eric, 23600 Jaen (ES); Liard, Laurent, 93012 Bobigny Cedex (FR)

(57) **Abstract**

The invention concerns a display system (2) for an automotive vehicle (1) having a first driving mode and a second driving mode, the display system (2) comprising:
- a detector (2.1) suitable for detecting if the first driving mode or the second driving mode is active,
- a visual display (2.2) installable at an interior of the automotive vehicle (1) and connected to the detector (2.1) in such a way that the visual display (2.2) provides a first visual pattern (V) associated to the first driving mode when the first driving mode is active and a second visual pattern (B) associated to the second driving mode when the second driving mode is active.

## Description

The present invention belongs to the field of display systems for the interior of automotive vehicles, in particular for those automotive vehicles having a plurality of driving modes.

Some vehicles have a plurality of power modes, as electric mode, hybrid mode or thermal mode. This type of vehicles can change their source of power depending on several parameters, such as the charge of an electric battery or the driving speed. In many occasions, the driver is not aware of the power mode shift, which leads to the driving style not being adapted to the power mode currently in use.

Other types of vehicles have a plurality of driving modes or driving behaviors, as eco-friendly mode, sport mode or comfort mode. This type of vehicles can change the engine performance, the energy consumption, and the speed of the gearbox depending on the activation of one of the driving modes by the driver. There is a need to improve the driving feeling of the driver accordingly to the chosen driving mode.

The present invention proposes a solution to these problems by means of a display system for an automotive vehicle having a first driving mode and a second driving mode, the display system comprising:
- a detector suitable for detecting if the first driving mode or the second driving mode is active,
- a visual display installable at an interior of the automotive and connected to the detector in such a way that the visual display provides a first visual pattern associated to the first driving mode when the first driving mode is active and a second visual pattern associated to the second driving mode when the second driving mode is active.

The visual display is configured to receive a signal from a detector which is able to detect the driving mode of the automotive vehicle and, in function of such driving mode a corresponding visual pattern that can be perceived by the driver is projected by the visual display. Considering driving mode as a power mode, as a result, the driver does always know the active power mode and he can immediately adapt his driving style to such power mode, thereby reducing the risks of reacting in an unexpected, dangerous manner to a sudden awareness of the automotive vehicle's state. Considering driving mode as a driving behavior, as a result, the driving feeling of the driver is improved by a visual pattern which is suitable to the chosen driving mode.

Among others, a first driving mode can be a first power mode, as a hybrid mode, wherein the automotive vehicle is powered by an electric motor and a combustion engine at the same time, and the second driving mode can be a second power mode, as an electric mode, wherein the automotive vehicle is exclusively driven by an electric motor. The invention is particularly suitable for such power modes, since the above described risks are higher when the electric mode is turned off, after which the driver may feel suddenly uneasy.

The display system of the invention can be applied to automotive vehicle having further power modes, such as a third power mode corresponding to the case in which only the combustion engine propels the automotive vehicle.

Alternatively, a first driving mode can be a first behavior of the engine(s), as an eco-friendly driving mode of the automotive vehicle, and a second driving mode can be a second behavior of the engine(s), as a sport driving mode of the automotive vehicle. The automotive vehicle's engine(s) can also have a third driving mode, as a comfort driving mode of the automotive vehicle.

The first visual pattern can comprise the projection of green light, which is advantageous in that it allows the driver to notice the change of driving mode in a fast and instinctive manner, since the colour green is normally associated to hybrid systems or to eco-friendly behaviors.

Likewise, and for the very same reasons, the second visual pattern may comprise the projection of blue light, a colour than often represents electric systems or peaceful environments.

Likewise, and for the very same reasons, a third visual pattern may comprise the projection of red light, a color than often represents powerful systems or dynamic behaviors. Each visual pattern may comprise the projection of light in a continuous way, in a pulsated way, or in a dynamic way, accordingly to the activation of one of the driving modes.

The visual display can comprise a screen installable on a dashboard of the automotive vehicle, which easies the driver's awareness of the driving mode shift as the screen is within his visual field.

The visual display may also comprise an interior lighting arrangement installable at the interior of the vehicle. The elements of this arrangement may be suitable for being positioned, among others, at the ceiling, on the driver and/or passenger seats and/or at inside walls of the automotive vehicle's doors. As a result, the awareness of the driving shift mode is further increased without requiring any effort from the driver, independently of the active driving mode.

The visual display may comprise a first display area which provides the first visual pattern associated to the first driving mode and a second display area, distinct of the first display area, which provides the second visual pattern associated to the second driving mode. The first display area could be a strip of the dashboard which integrates a backlight luminous device, which is arranged for diffusing a smooth light. The second display area could be a central area of the steering wheel which integrates a direct-light luminous device, which is arranged for emitting a strong light.

The display systems presented above can be part of an automotive vehicle which would therefore comprise:
- a power system capable of working in a first driving mode and in a second driving mode,
- an interior of the automotive vehicle,
- a display system according to the embodiments above, the system thereby comprising:
   - a detector suitable for detecting if the first driving mode or the second driving mode is active,
   - a visual display installed at an interior of the automotive and connected to the detector in such a way that the visual display provides a first visual pattern associated to the first driving mode when the first driving mode is active and a second visual pattern associated to the second driving mode when the second driving mode is active.

The power system of the automotive vehicle may comprise an electric motor and a combustion engine.

The above-explained advantages are applicable to such automotive vehicle as well.

These and other features and advantages of the invention will become more evident from the following detailed description of preferred embodiments, given only by way of illustrative and non-limiting example, in reference to the attached figures:
Figure 1 depicts an automotive vehicle comprising a display system suitable for providing a given visual pattern associated to a particular power mode.
Figure 2 represents a visual display projecting a first visual pattern associated to a first power mode.
Figure 3 shows a visual display projecting a second visual pattern associated to a second power mode.
Figure 4 shows a visual display projecting a third visual pattern associated to a third power mode.
Figures 5 to 7 show an automobile vehicle with a display system according to an other embodiment of the invention

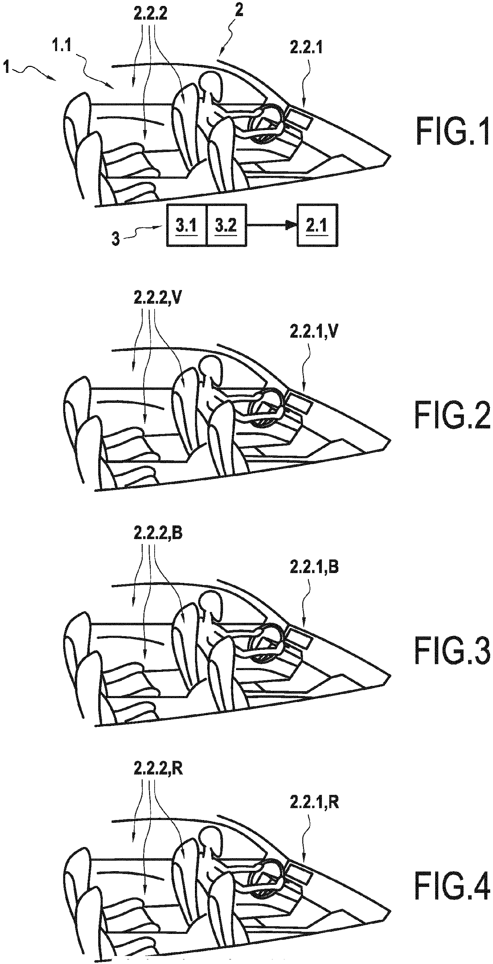

Figure 1 shows an automobile vehicle 1 having an interior 1.1. A display system 2 is installed in the automotive vehicle 1. The display system 2 comprises a detector 2.1 connected to the power system 3 of the automotive vehicle 1 in such a way that an electric signal corresponding to a particular power mode can be sent to the display system 2. The skilled person can implement, without any burden, a detector 2.1 to carry out this function, similarly to the detectors that are associated to other parameters of the power system in particular (e.g. engine revolution signal or speedometer) or of the automotive vehicle in general (e.g. fuel meter).

In the embodiment of figure 1, the power system 3 comprises an electric motor 3.1 and a combustion engine 3.2.

The display system 2 comprises a visual display 2.2 installed at the interior 1.1 of the automotive vehicle 1. The visual display 2.2 of this embodiment comprises a screen 2.2.1 installed on the automotive vehicle's dashboard and an interior lighting arrangement 2.2.2 comprising interior lighting elements distributed at the ceiling, on the seats and along the internal walls of the automotive vehicle's doors. The elements can of course be installed at any other locations at the inside 1.1 of the automotive vehicle 1.

When a signal corresponding to a given power mode is received by the display system 2, the visual display 2.2 (in the case of this embodiment, comprising the screen 2.2.1 and the interior lighting arrangement 2.2.2) emits a light pattern V, B, R that is perceived by the driver so that his driving style can adapt to the power mode.

The embodiment comprising an interior lighting arrangement 2.2.2 is advantageous in that the change of power mode is shown in a surrounding manner that allows the driver to be aware of the change without having to pay attention to a particular indicator that may be overlooked or that may divert the driver's attention from other driving tasks.

Figure 2 shows the way of working of the display system of figure 1, in which the visual display 2.2 comprises the screen 2.2.1 and the interior lighting arrangement 2.2.2 in turn comprising the plurality of interior lighting elements at the ceiling, on the driver and/or passenger seats and/or at inside walls of the automotive vehicle's doors. The screen 2.2.1 and the interior lighting arrangement 2.2.2 provide a first visual pattern V, which indicates that the first power mode is active. In this embodiment, the first power mode is a hybrid mode and the first visual pattern V includes the projection of green light. In the first hybrid mode, the automotive vehicle is powered by both the electric motor 3.1 and the combustion engine 3.2

Figure 3 illustrates the visual display 2.2 of figure 2 after the power mode has shifted from the first power mode to the second power mode. In this example, the second power mode is an electric mode, in which the automotive vehicle is driven by the electric motor 3.1, and the second visual pattern B provided by the visual display includes the projection of blue light.

The visual display 2.3 represented in figure 2.1 depicts the automotive vehicle of figures 2 and 3 once the power mode has changed from the second power mode to the third power mode, which, in the present example, is a combustion engine mode (that is, the automotive vehicle is propelled by the combustion engine 3.2). Accordingly, the visual display 2.2 provides a third visual pattern R which, in this example, comprises the projection of red light.

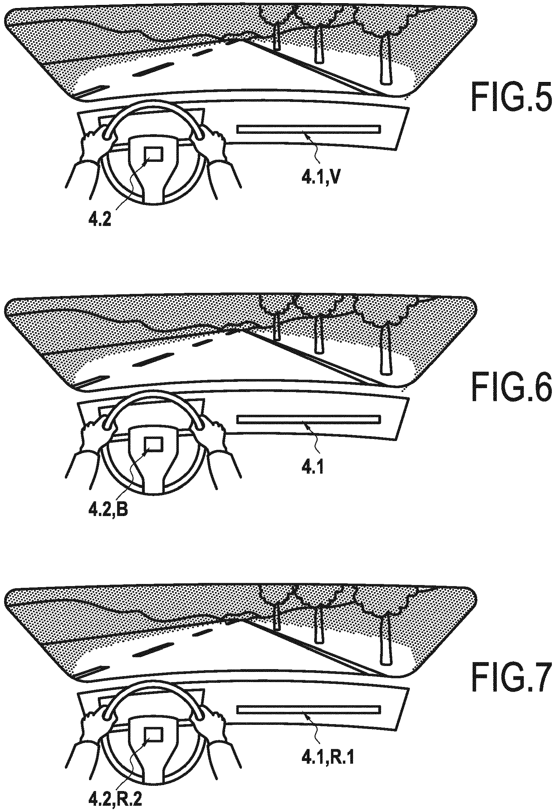

Figures 5 to 7 show an automobile vehicle with a display system according to an other embodiment of the invention. The display system comprises a first display area 4.1 which is a strip of the dashboard of the vehicle. The first display area 4.1 integrates a backlight luminous device arranged for diffusing a smooth light.

The display system comprises a second display area 4.2, which is a central area of the steering wheel. The second display area 4.2 integrates a direct-light luminous device, which is arranged for emitting a strong light.

When the driver activates an eco-friendly driving mode of the automotive vehicle (Fig.5), the first display area 4.1 provides a visual pattern V, which includes a projection of a green continuous smooth light from the strip of the dashboard; while the second display area 4.2 remains inactive.

When the driver activates a comfort driving mode of the automotive vehicle (Fig.6), the second display area 4.2 provides a visual pattern B, which includes a projection of a blue pulsated strong light from the central area of the steering wheel; while the first display area 4.1 remains inactive.

When the driver activates a sport driving mode of the automotive vehicle (Fig.7), the first display area 4.1 provides a visual pattern R.1, which includes a projection of a red dynamic light from the strip of the dashboard, emitted progressively from the left to the right of the strip, while the second display area 4.2 provides a visual pattern R.2, which includes a projection of a red continuous strong light from the central area of the steering wheel.

It should be understood that the invention is not limited to the embodiments described hereinabove and that many modifications can be made to these embodiments without going out of the scope of the invention. Especially, the features, the alternatives and the embodiments can be combined to each others, in different ways, insofar as they are not incompatible or mutually exclusive.

### References

1.- Automotive vehicle
1.1.- Interior of the automotive vehicle
2.- Display system
2.1.- Detector
2.2.- Visual display
2.2.1.-Screen
2.2.2.- Interior lighting arrangement
3.- Power system
3.1.- Electric motor
3.2.- Combustion engine
V.- First visual pattern
B.- Second visual pattern
R.- Third visual pattern

## Claims

**1.** A display system (2) for an automotive vehicle (1) having a first driving mode and a second driving mode, the display system (2) comprising:
- a detector (2.1) suitable for detecting if the first driving mode or the second driving mode is active,
- a visual display (2.2) installable at an interior of the automotive vehicle (1) and connected to the detector (2.1) in such a way that the visual display (2.2) provides a first visual pattern (V) associated to the first driving mode when the first driving mode is active and a second visual pattern (B) associated to the second driving mode when the second driving mode is active.

**2.** A display system (2) according to claim 1, wherein the first driving mode is a first power mode

**3.** The display system (2) of any one of the preceding claims, wherein the second driving mode is a second power mode.

**2.** 1.- The display system (2) of any one of the preceding claims, wherein the first visual pattern (V) comprises the projection of green light.

**5.** The display system (2) of any one of the preceding claims, wherein the second visual pattern (B) comprises the projection of blue light.

**6.** The display system (2) of any one of the preceding claims, wherein the visual display (2.2) comprises a screen (2.2.1) suitable for being installed on a dashboard of the automotive vehicle (1).

**7.** The display system (2) of any one of the preceding claims, wherein visual display (2.2) comprises an interior lighting arrangement (2.2.2) for being set up at the interior of the automotive vehicle.

**8.** The display system according to claim 7, wherein the interior lighting arrangement (2.2.2) comprises interior lighting elements suitable for being mounted at the ceiling, on the driver and/or passenger seats and/or at inside walls of the automotive vehicle's doors.

**9.** An automotive vehicle (1) comprising:
- a power system (3) capable of working in a first driving mode and in a second driving mode,
- an interior (1.1) of the automotive vehicle,
- a display system (2) according to any one of the preceding claims, the system thereby comprising at least:
- a detector (2.1) suitable for detecting if the first driving mode or the second driving mode is active,
- a visual display (2.2) installed at an interior (1.1) of the automotive vehicle (1) and connected to the detector (2.1) in such a way that the visual display (2.2) provides a first visual pattern (V) associated to the first driving mode when the first driving mode is active and a second visual pattern (B) associated to the second driving mode when the second driving mode is active.

**10.** The automotive vehicle (1) of claim 9, wherein the power system (3) comprises an electric motor (3.1) and a combustion engine (3.2).
